# EUROPÄISCHE PATENTSCHRIFT

(11) **EP 2 362 124 B1**
(45) Veröffentlichungstag und Bekanntmachung des Hinweises auf die Patenterteilung: **03.10.2012**
(21) Anmeldenummer: 10014769.3
(22) Anmeldetag: 19.11.2010
(51) Int. Cl.: F16K 1/12, F16K 31/52, F16K 31/60, F27D 7/02, F27D 3/16, F27B 3/22, C21C 5/46

(54) **Schnellschlussventil mit Dosierentlastung**
Quick-closing valve with metering discharge
Soupape à fermeture rapide dotée d'une décharge de dosage

(30) Priorität: 18.02.2010 DE 102010008527
(43) Veröffentlichungstag der Anmeldung: 31.08.2011
(73) Patentinhaber: BEDA Oxygentechnik Armaturen GmbH, 40885 Ratingen (DE)
(72) Erfinder: Bayer, Reinhardt, 47269 Duisburg (DE)
(74) Vertreter: Schulte & Schulte

(56) Entgegenhaltungen:
- EP-A1- 0 372 099
- DE-A1- 3 003 665

## Beschreibung

Die Erfindung betrifft ein Schnellschlussventil mit Dosierentlastung für Sauerstofflanzen und andere, leicht entzündliche mit mehreren bar anstehende Gase führende Rohre, wobei die das Ventil passierende Gasmenge von Hand zu regeln ist, wozu im Durchflusskanal ein axial gegen die Kraft einer Ventilfeder verschiebbare, über die Ventilfeder in einem Dichtsitz gehaltener Dichtkörper angeordnet ist, der über einen auf der dem Gaszufluss abgewandten Seite hervorstehenden Ansatz von dem Druckteil eines am Ventilrohr schwenkbar angebrachten Handhebels den Dichtkörper im Durchflusskanal mitnehmend verschiebbar ist.

Derartige Schnellschlussventile werden benötigt, um bei der Gaszufuhr in der Nähe des Verbrauchers die Gasleitung oder Mediumleitung zu öffnen oder zu verschließen. Gasleitungen, unabhängig davon ob es sich um Stahl- oder Schlauchleitungen handelt, sind dabei so ausgelegt, dass sie auch höheren Drücken von beispielsweise 16 bar genügen. Bei dem bekannten Drehventil gemäß DE-GM 20 2007 008 369.6 kann zwar eine Gasdosierung im gewissen Bereich vorgenommen werden, allerdings mit relativ hohem Aufwand. Vor allem ist problematisch, dass bei diesen Drehventilen eine Totmannschaltung nur mit noch größerem Aufwand, wenn überhaupt, zu erreichen ist. Bei bekannten Hebelventilen dagegen kann diese Totmannschaltung einfach dadurch erreicht werden, dass der Hebel bei Loslassen durch den Verbraucher sich automatisch durch Federdruck in die Schließposition hineinbewegt. Dies gilt selbstverständlich vor allem für den zum Verschließen vorgesehenen Dichtkörper. Dieser Dichtkörper wird von einer außen aufgesetzten Ventilfeder belastet und muss als ganzer Körper also mit seiner ganzen Fläche gegen den anstehenden Gasdruck und den Druck der Ventilfeder aus dem Dichtsitz herausbewegt werden. Dies ist mit Hilfe des Handhebels natürlich möglich, aber nur mit entsprechendem Kraftaufwand und nachteiligerweise mit dem Problem, dass eine auch nur annähernd genaue Dosierung der passierenden Gasmenge nicht möglich ist. Nachteilig ist weiter, dass bei Unsauberkeiten des Gases oder aber bei zurückflutender glühender Asche oder Stahl die außen auf dem Dichtkörper aufsitzende Feder so beschädigt werden kann, dass das Ventil nicht mehr schließt, sondern vielmehr den problematischen Sauerstoff durchlässt, sodass eine Gefährdung der Bedienenden damit verbunden ist. Aus der DE 30 03 665 A1 ist eine Sauerstofflanze mit einem Schnellschlussventil bekannt, bei dem ein einteiliger Dichtkörper gegen die Kraft der auf dem Gehäuse des Dichtkörpers aufliegenden Ventilfeder und des anstehenden Gasdrucks aus dem Dichtsitz in die geöffnete Stellung verschiebbar ist. Der Dichtkörper wird über einen Handhebel im Durchflusskanal des Schnellschlussventils verschoben.

Der Erfindung liegt daher die Aufgabe zu Grunde, das bekannte Schnellschlussventil so zu modifizieren, dass mit geringem Kraftaufwand eine möglichst genaue Dosierung des Gases bzw. Sauerstoffes möglich ist..

Die Aufgabe wird erfindungsgemäß dadurch gelöst, dass der Dichtkörper zweiteilig und die Ventilfeder aufnehmend hohl ausgebildet ist, dass das dem Gaszufluss zugewandte Gehäuseteil im Durchflusskanal festgelegt und das rückwärtige Gehäuseteil den Dichtsitz freigebend im vorderen Gehäuseteil gegen die Kraft der Ventilfeder verschiebbar und umgekehrt über die Ventilfeder im Dichtsitz gehalten ist.

Bei einem derart ausgebildeten Schnellschlussventil ist die Ventilfeder, die im Gefahrenfall dafür zu sorgen hat, dass das Ventil geschlossen ist, so geschützt untergebracht, dass sie ungefährdet ihre wichtige Aufgabe wahrnehmen kann. Vorteilhaft ist weiter, dass sich die Ventilfeder nicht mehr im Gasfluss befindet und daher dessen Strömung nicht beeinträchtigen kann. Durch geschickte Ausbildung des Dichtkörpers einerseits und des Durchflusskanals kann damit annähernd eine für den Sauerstoff wichtige laminare Strömung erreicht werden. Da das rückwärtige Gehäuseteil ohne Druckdifferenz zwischen vorderem und rückwärtigem Gehäuseteil hin- und hergeschoben wird und damit den Dichtsitz frei macht bzw. in den Dichtsitz hineingedrückt wird, kann der für die Dichtung wichtige Dichtkörperbereich vom Druck des anströmenden Gases unbeeinflusst hin- und hergeschoben werden. Damit ist eine feine Dosierbarkeit möglich, was insbesondere beim Anzünden der Sauerstofflanze ausgesprochen wichtig ist. Durch geringe Gaszufuhr ist das Entzünden der Gasflamme am Ende der Sauerstofflanze einfach und sicher möglich, wobei dann der weitere Druck kontinuierlich erhöht werden kann, und zwar auf eine Höhe, die für den jeweiligen Einsatz genau richtig ist. Durch diese geschickte Anordnung des Dichtkörpers bzw. des für die Dichtung wichtigen Teils dieses Dichtkörpers kann ein solches Schnellschlussventil problemlos beispielsweise auch von Frauen betätigt werden, was für den Betrieb neben der feinen Dosierbarkeit als weiterer Vorteil wichtig sein kann. Der von der Hand des Bedieners aufzubringende Druck bleibt praktisch immer gleich unter allen Druckstufen, selbst wenn er den im hohlen Ventilfederraum entstehenden Luftdruck mit beeinflussen muss. Hier gibt es wie weiter hinten erläutert aber zusätzlich Abhilfe, sodass die beschriebene Leichtgängigkeit und genaue Dosierbarkeit als entscheidender Vorteil hervorzuheben ist.

Nach einer zweckmäßigen Ausführungsform der vorliegenden Erfindung ist das vordere Gehäuseteil mit der in den Gaszufluss hineinreichenden Kegelspitze über einen Lochkranz mit der Wandung des Durchflusskanals verbunden oder an ihr festgelegt. Dadurch ist es möglich, das hintere Gehäuseteil in das vordere Gehäuseteil hinein zu bewegen und dabei die Feder zu spannen bzw. umgekehrt. Durch den Lochkranz ist eine einfache und genaue Fixierung des vorderen, als Widerlager dienenden Gehäuseteils möglich, wobei der Lochkranz dafür sorgt, dass das durch den Durchflusskanal anströmende Gas annähernd laminar am eigentlichen Dichtkörper vorbeigeführt werden kann, um diesen auch vom Druck des Gases zu bewahren oder zumindest weitgehend zu bewahren. Die Kegelspitze teilt den aus dem Durchflusskanal herangeführten Gasstrom gleichmäßig auf und führt ihn durch den Lochkranz, also durch die einzelnen Bohrungen des Lochkranzes hindurch, sodass auch damit die laminare Führung begünstigt wird.

Im Problemfall zurückströmender flüssiger Stahl wird innerhalb des Schnellschlussventiles vorteilhaft aufgehalten, wenn wie erfindungsgemäß vorgesehen, vom Gaszufluss her gesehen hinter dem Lochkranz mit vorzugsweise 20 Bohrungen bei 25 mm Kanaldurchmesser ein Ringkanal ausgebildet ist. In diesem Ringkanal sammelt sich der flüssige Stahl und kann dann durch die vielen relativ kleinen Bohrungen des Lochkranzes nicht hindurch oder aber festigt aus, sodass die Gefahr auch dadurch erheblich verringert bzw. ganz vermieden wird.

Die laminare Ausbildung des Gasstromes wird weiter dadurch begünstigt, dass die Kegelspitze in das abgerundete Dach des vorderen Gehäuseteils übergehend und den Gasfluss annähernd laminar führend ausgebildet ist. Dies ist insbesondere dann erreicht, wenn die Kegelspitze relativ klein auf diesem abgerundeten Gehäuseteil aufsitzt, sodass der Gasfluss wie weiter vorne schon erwähnt sehr gleichmäßig aufgeteilt und durch die nachfolgenden Bohrungen im Lochkranz hindurchgeführt werden kann. In dem vorderen Gehäuseteil ist dabei die Ventilfeder mit angeordnet, die sich also am entsprechenden Ende der darin befindlichen Radialbohrung abstützt und andererseits am Ende der Axialbohrung des rückwärtigen Gehäuseteils. Wie schon die Erläuterung zeigt, ist diese Ventilfeder somit insgesamt eingeschlossen und vor dem Gasstrom geschützt.

Erwähnt ist bereits, dass die beiden Gehäuseteile ineinander verschiebbar angeordnet und ausgebildet sind, um dadurch die Ventilfeder zu belasten bzw. zu entlasten. Dabei ist es vorteilhaft, wenn eine im vorderen Gehäuseteil verschiebbare, offene Gehäusehülse des rückwärtigen Gehäuseteils zylinderisch und zwei Dichtringe auf der Außenseite aufweisend geformt bzw. angeordnet ist, wobei das vordere Gehäuseteil eine korrespondierende Innenbohrung aufweist. Dies bedeutet also, dass die Gehäusehülse des hinteren bzw. rückwärtigen Gehäuseteils in einer entsprechenden Innenbohrung des vorderen Gehäuseteils verschiebbar ist, wobei die beiden Dichtringe dafür sorgen, dass der die Ventilfeder aufnehmende Innenraum bzw. Hohlraum gegen den anstehenden Gasdruck abgedichtet ist. Durch Wahl der Dichtringe und Wahl der Anordnung kann dabei sichergestellt werden, dass die notwendigerweise zu überwindende Reibung an der Innenwand der Innenbohrung relativ gering ist, sodass dadurch nicht ein wesentlich höherer Kraftaufwand beim Hin- und Herschieben des rückwärtigen Gehäuseteils des Dichtkörpers notwendig ist.

Wie schon erwähnt kann das Entstehen eines Luftpolsters in dem beschriebenen Hohlraum vermieden werden, wobei dazu vorgesehen ist, dass die Gehäusehülse eine Axialbohrung aufweist, die in eine jenseits der Dichtungsschräge des hinteren Gehäuseteils endende Radialbohrung übergehend und damit eine Fließverbindung zum Durchflusskanal bzw. Umgehungskanal vorgebend ausgebildet ist. Somit kann beim Zusammenschieben der beiden Gehäuseteile ein zusätzlicher Druck nicht entstehen und mit Hilfe des Handhebels braucht nur die genau vorgewählte Kraft der Ventilfeder überwunden zu werden. Auch beim Schließen des Ventils ist nur die Ventilfeder entscheidend und nicht ein eventuell in dem Hohlraum entstandener Luftüberdruck. Der beim Bewegen der beiden Gehäuseteile entstehende Luftdruck in dem Hohlraum wird wie beschrieben durch die Axialbohrung und die Radialbohrung abgebaut, diese Luft mischt sich anschließend mit dem Sauerstoffgas und kann so völlig unschädlich mit abgeführt werden, zumal nur ein solches Gasgemisch für die Bildung eines Luftpolsters im Hohlraum maßgebend sein kann.

Ein Zusammenbau eines derartigen Schnellschlussventils wird dadurch begünstigt, dass der Ansatz mit der Dichtungsschräge des hinteren bzw. rückwärtigen Gehäuseteils über korrespondierende Gewinde verfügt und dabei die mit dem Dichtsitz korrespondierende Dichtungsschräge mit Dichtungsring gegen die Gehäusehülse festsetzend verbindbar ist. Der Ansatz wird in das rückwärtige Gehäuseteil hineingedreht, nimmt dabei den Teil mit der Dichtungsschräge mit und klemmt diesen und den Dichtungsring gegen den übrigen Teil des rückwärtigen Gehäuseteils fest, sodass der Dichtungsring seine Position hat und natürlich auch die Dichtungsschräge.

Die Dichtungsschräge mit dem Dichtungsring sorgt mit dem Dichtsitz zusammen dafür, dass bei Nichtbeeinflussung durch den Handhebel ein immer dichter Sitz des Ventils gewährleistet ist. Beim Öffnen, und das schon bei geringer Bewegung des Handhebels, strömt das Gas, vor allen Dingen der Sauerstoff, in entsprechender Menge durch das Schnellschlussventil hindurch, wobei dies weitgehend laminar möglich ist, weil die von den Bohrungen des Lochkranzes gebildeten Umgehungskanäle in hinter den Dichtsitz ansetzende Schrägbohrungen übergehen, sodass das Gas von dort in an der Handgriffsausnehmung vorbeiführende Lochkanäle übergehend abströmen kann. Da durch die Formgebung des Schnellschlussventils der Lochkranz mit seinen Bohrungen in etwa einen Gasdurchtritt ermöglicht, der dem Durchflusskanal entspricht und auch die nachfolgenden Schrägbohrungen und die Lochkanäle einen solchen Querschnitt zur Verfügung stellen, können entsprechend große Mengen an Gas abgeführt werden, wenn die Sauerstofflanze erst einmal angezündet ist. Statt bisher 145 Nm³/h können jetzt rund 270 Nm³/h bei 6 bar durch ein solches Schnellschlussventil hindurchgeführt werden, ohne dass die geringste Gefährdung durch die hohe Menge an Gas bzw. Sauerstoff auftritt. Gerade bei Sauerstoff würde bei auftretender Verwirbelung immer die Gefahr bestehen, dass Entzündungen oder andere Probleme auftreten, was durch die laminare Führung des Sauerstoffes durch das Schnellschlussventil hindurch ausgeschlossen wird.

Die beschriebene Führung des Gases wird durch geschickte Anordnung der Schrägbohrungen und des Schrägbohrungsraumes begünstigt, was insbesondere dadurch erreicht wird, dass der Dichtsitz und die Schrägbohrungen einem den Ansatz führenden Einschubteil zugeordnet sind und dass auf dem Ansatz ein den Schrägbohrungsraum abdichtendes Dichtteil mit Ringsteg angeordnet ist. Über das Dichtteil und den Ringsteg, die auf dem Ansatz verschieblich angeordnet sind und dicht anliegen, wird dieser gesamte Bereich gasdicht gemacht, sodass kein Gas, insbesondere Sauerstoff, versehentlich im Bereich der Handgriffausnehmung abströmen kann. Vielmehr wird das Gas bzw. der Sauerstoff gezwungen, die vorgegebenen Kanalwege zu benutzen. Dieses Dichtteil mit Ringsteg besteht aus entsprechend flexiblem Material, wie Spezialgummi und kann im Einschubteil in einer entsprechenden Ringausnehmung angeordnet werden, sodass es selbst beim Zusammenschrauben des Schnellschlussventils nicht überbeansprucht wird, sondern immer dichtend angeordnet bleibt.

Ein leichtgängiges Schnellschlussventil wird weiter dadurch optimiert, dass der Handhebel um eine randseitig der Handgriffsausnehmung angeordnete Welle schwenkbar und am überstehenden Druckteil eine im Druckbereich angeordnete Kugel aufweist. Der Handhebel hat somit ein verlängertes Druckteil und kann dann gezielt auf den Ansatz einwirken und das Ventil öffnen oder einen Verschluss zulassen. Die Kugel sorgt dafür, dass durch das aneinander Vorbeibewegen von Druckteil des Handhebels und Ansatz keine zu große Reibung auftritt. Die Kugel ist dabei im Druckteil positioniert und sorgt dafür, dass Reibungskräfte nicht auftreten können.

Eine genaue Positionierung der Kugel erreicht man gemäß einer Ausbildung der Erfindung dadurch, dass die Kugel einer in das Druckteil einschraubbaren Schraubhalterung zugeordnet ist und dass die freie Spitze des Ansatzes abgeschrägt oder abgeschnitten oder gemuldet ist. Die Kugel und damit das Druckteil können nicht ausweichen und aneinander vorbeirutschen, sondern die Kugel sorgt immer dafür, dass die Kraft des Handhebels gleichmäßig und sicher auf den Ansatz und damit auf das gesamte Ventil übertragen wird.

Weiter vorne ist bereits darauf hingewiesen worden, dass das gesamte Schnellschlussventil aus verhältnismäßig wenig Bauteilen besteht, wobei diese Bauteile innerhalb des Ventilrohres einfach und zweckmäßig angeordnet werden können, wenn der Dichtkörper mit dem Ansatz und das Einschubteil mit den Schrägbohrungen über eine Schraubhülse im Ventilrohr festlegbar sind. Die Schraubhülse weist gleichzeitig am freien Ende ein Außengewinde auf, sodass der Anschluss an eine Schlauchleitung oder ein Rohr leicht erreicht werden kann.

Die Erfindung zeichnet sich insbesondere dadurch aus, dass ein Schnellschlussventil geschaffen ist, das über eine hohe Dosierbarkeit verfügt, wobei dies auch schon im unteren Bereich der durchfließenden Gasmenge zutrifft. Damit ist die Möglichkeit gegeben, mit einem derartigen Schnellschlussventil von Hand beim Anzünden beispielsweise einer Sauerstofflanze genau die Menge an Gas bzw. Sauerstoff zuzuführen, die für den Anzündvorgang optimal ist. Vorteilhaft ist weiter, dass das Schnellschlussventil so aufgebaut ist, dass der durchströmende Gasfluss praktisch laminar gehalten werden kann, sodass es zu Gefährdungen innerhalb des Schnellschlussventils praktisch nicht kommen kann. Das Gas wird dabei so an dem Dichtkörper vorbeigeführt, dass dieser fast unbeeinflusst durch den Gasdruck hin- und hergeschoben werden kann und zwar von Hand über den Handhebel. Geschickter Weise ist dabei die Ventilfeder innerhalb des zweiteiligen Dichtkörpers untergebracht, sodass sie sowohl vom Gasdruck wie von Gefährdungen des vorbeiströmenden Gases gesichert ist. Der sie aufnehmende Hohlraum ist an den abführenden Gaskanal angeschlossen, sodass hier ein Überdruck oder Ähnliches nicht auftreten kann. Schließlich ist aber für die gute Handhabbarkeit besonders wichtig, dass der zweiteilige Dichtkörper zwei Gehäuseteile aufweist, die ineinander verschiebbar sind, wobei das vom Gaszufluss her gesehen rückwärtige Dichtteil in das andere Dichtteil hinein geschoben wird, und dies weitgehend unbeeinflusst vom anstehenden Gasdruck. Das als Widerlager dienende vordere Gehäuseteil ist dabei im Durchflusskanal fixiert angeordnet und zwar über einen Lochkranz, dessen Löcher so gewählt sind, dass beim Rückströmen von flüssigem Stahl im Problemfall hier dieser flüssige Stahl festgehalten wird und damit unschädlich gemacht wird, wobei das Gehäuse insgesamt aus einem besonderen Messing besteht, der die Temperatur ableiten kann. Insgesamt gesehen ist das Innere des Schnellschlussventils auf die beschriebene Art und Weise einen sauerstoffgerechten Gasfluss sichernd ausgeführt.

Weitere Einzelheiten und Vorteile des Erfindungsgegenstandes ergeben sich aus der nachfolgenden Beschreibung der zugehörigen Zeichnung, in der ein bevorzugtes Ausführungsbeispiel mit den dazu notwendigen Einzelheiten und Einzelteilen dargestellt ist. Es zeigen:
- Figur 1: ein Schnellschlussventil in perspektivischer Darstellung,
- Figur 2: einen Längsschnitt durch dieses Schnellschlussventil,
- Figur 3: eine vergrößerte Wiedergabe des Ventilrohrbereiches mit dem Schließmechanismus und den dafür notwendigen Bauteilen und
- Figur 4: eine Schrägansicht dieses Bereiches, sodass die Schrägbohrungen und der Lochkranz gut zu sehen sind.

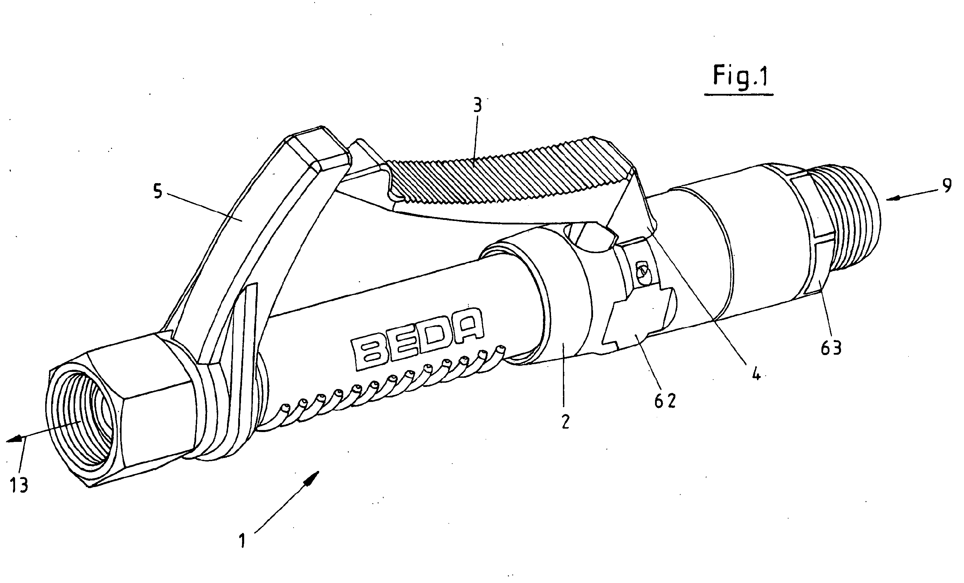

Figur 1 zeigt ein so genanntes Ventil 1, also ein Schnellschlussventil, das mit einem Handhebel 3 ausgerüstet ist. Dieser Handhebel 3 ist außen auf dem Ventilrohr 2 angeordnet und verfügt über ein hier nicht klar erkennbares Druckteil 4, mit dem auf das hier ebenfalls nicht erkennbare eigentliche Ventil bzw. den Dichtkörper 10 eingewirkt wird. Der Handhebel 3 auf dem Ventilrohr 2 wird durch eine Sicherungsstrebe 5 in der Schließposition gehalten, sodass im Gefahrenfall hier eine einfache Totmannschaltung verwirklicht ist. Lässt der Bedienende den Handhebel 3 los, so schnellt dieser über die hier nicht erkennbare Ventilfeder 8 und den Ansatz 15 in die Ventilschließstellung zurück, sodass weiteres Gas, also insbesondere Sauerstoff, dieses Ventil 1 nicht passieren kann.

Mit 9 ist der Gaszufluss und mit 13 die Abführung des Gases in Richtung Sauerstofflanze gekennzeichnet. Mit 62 und 63 sind Anlageflächen gekennzeichnet, die bei dem Zusammenbau des Ventils 1 den vorteilhaften Einsatz eines Schlüssels oder eines ähnlichen Hilfsgerätes ermöglichen.

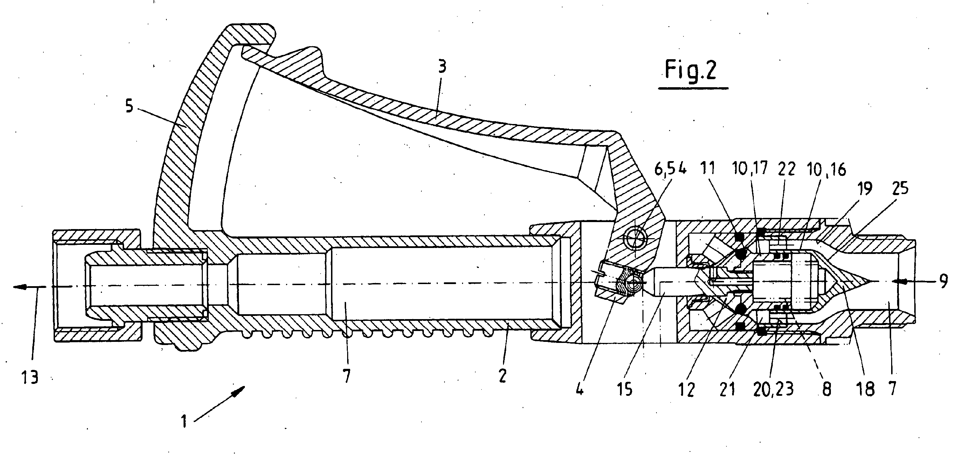

Figur 2 zeigt einen Längsschnitt durch dieses Ventil 1, wobei auch erkennbar ist, dass der Handhebel 3 über die Sicherungsstrebe 5 in der hier wiedergegebenen Schließstellung des Ventils 1 festgehalten wird. Er behält diese Position, sodass bei Bedarf der Bedienende sofort wieder das Ventil 1 zum Öffnen bedienen kann.

Der Gaszufluss erfolgt von 9 her und wird durch die Kegelspitze 18 des Dichtkörpers 10 um den eigentlichen Dichtköper 10 herumgeführt. Der Durchflusskanal 7 wird in eine Art Umgehungskanal 38 überführt, sodass das eigentliche Gehäuse des Dichtkörpers 10 weitgehend vom Druck des anstehenden Gases freigehalten wird.

Der Handhebel 3 wird um den Schwenkpunkt 6 herum verschwenkt, sodass dann das Druckteil 4 auf den Ansatz 15 des Dichtkörpers 10 einwirken kann und diesen gezielt aus dem Dichtsitz 11 herausbewegt. Dieser Dichtsitz 11 wirkt mit der abgewandten Seite 12 des Dichtkörpers 10 zusammen und sorgt dafür, dass in der Schließposition Gas diesen Bereich nicht passieren kann. Dabei wird der Dichtkörper 10 durch die angedeutete Ventilfeder 8 in die Dichtposition oder Verschlussposition gedrückt und in dieser gehalten. Über den Handhebel 3 und das Druckteil 4 sowie den Ansatz 5 kann der Dichtkörper 10 gegen die Federkraft der Ventilfeder 8 aus dem Dichtsitz 11 herausgehoben werden.

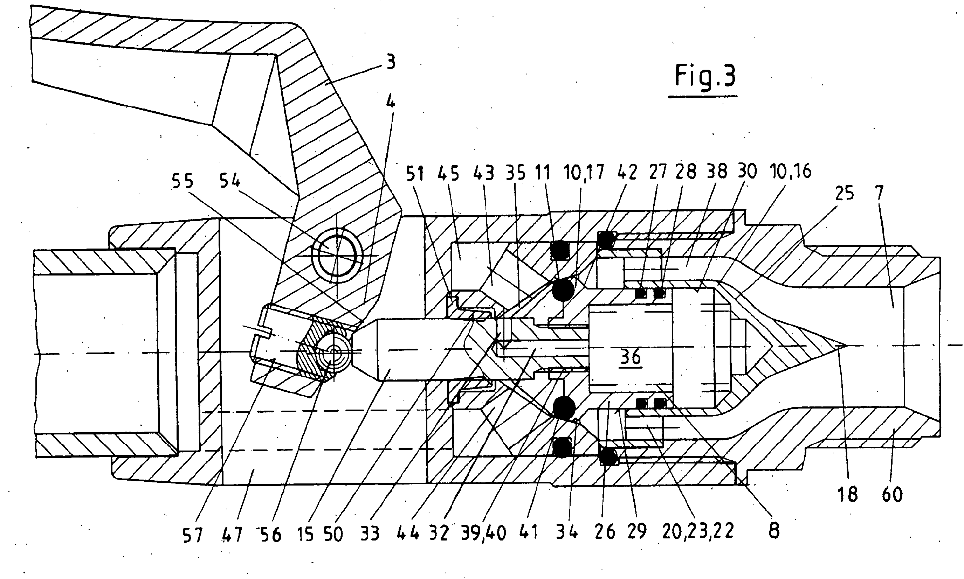

Im dargestellten Beispiel, das insbesondere auch aus Figur 3 deutlich zu erkennen ist, ist der Dichtkörper 10 zweiteilig ausgebildet, wobei das vordere Gehäuseteil 16 über einen Lochkranz 20 an der Wandung 19 des Durchflusskanals 7 festgelegt ist. Das rückwärtige Gehäuseteil 17 ist im festen vorderen Gehäuseteil 16 verschieblich angeordnet, wozu seine Gehäusehülse 26 mit den Dichtringen 27, 28 zylinderförmig ausgebildet und an die Innenbohrung 30 des vorderen festen Gehäuseteils 16 angepasst ist. Über die Dichtringe 27, 28 ist sichergestellt, dass das Gas auf diesen Bereich und insbesondere die in dem Hohlraum liegende Ventilfeder 8 nicht einwirken kann. Die Dichtringe 27, 28 sind auf der Außenseite 29 der Gehäusehülse 26 angeordnet. Diese Gehäusehülse 26 ist mit dem Ansatz 15 über ein Gewinde 39, 40 verbunden, wobei die Dichtungsschräge 34 mit dem Dichtungsring 41 gegen die Gehäusehülse 26 und den Dichtsitz 11 angedrückt wird.

Im Ansatz 15 ist eine Axialbohrung 32 angeordnet, die zusammen mit der endseitigen Radialbohrung 33 dafür sorgt, dass der die Ventilfeder 8 aufnehmende Hohlraum 36 zum Druckabbau an die abführenden Kanäle bzw. die Schrägbohrungen 43, 44 angeschlossen ist.

Diese Schrägbohrungen 43, 44 im Einschubteil 46 sorgen mit dem Schrägbohrungsraum 45 zusammen dafür, dass beim geöffneten Ventil das Gas durch den Durchflusskanal 7, den Umgehungskanal 38 und dann eben die Schrägbohrungen 43, 44 abströmen kann und zwar in den bzw. in die Lochkanäle 48. Diese Lochkanäle 48 führen an der Handgriffsausnehmung 47 vorbei und ermöglichen einen weitgehend laminaren Strom des Gases.

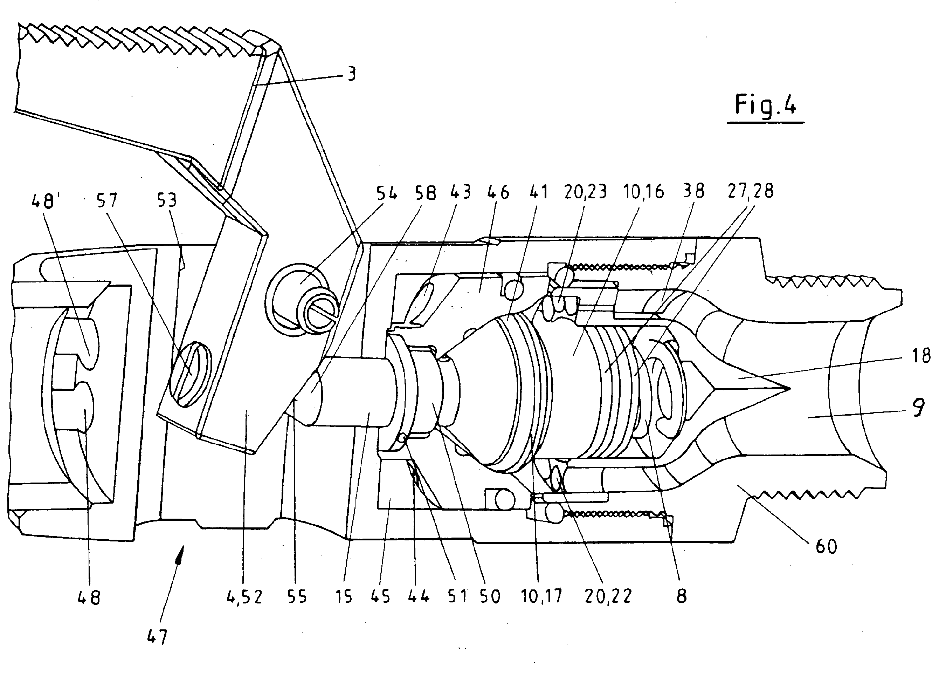

Auf die besondere Ausbildung des festsitzenden vorderen Gehäuseteils 16 ist bereits eingegangen worden. Erkennbar ist, dass die Kegelspitze 18 so ausgebildet ist, dass der anströmende Gasfluss gleichmäßig aufgeteilt in Richtung des Umgehungskanals 38 abströmen kann. Teil des Umgehungskanals 38 bilden dann die den Lochkranz 20 bildenden Bohrungen 22, 23. Die Lage und Ausbildung dieses Lochkranzes ist besonders günstig Figur 4 zu entnehmen, wobei hier auch die beiden Dichtringe 27, 28 auf der Außenseite 29 der Gehäusehülse 26 zu entnehmen sind. Zur weiteren guten Führung des Gasstromes ist das abgerundete Dach 25 des vorderen Gehäuseteils 16 zu nennen.

Der Lochkranz mit seinen Bohrungen 22, 23 geht in einen Ringkanal 21 über, von wo aus das anströmende Gas dann im Falle des geöffneten Ventils 1 am Dichtsitz 11 vorbei in Richtung Schrägbohrungen 43, 44 strömen kann.

Figur 3 zeigt deutlich, dass der auf das Gehäuse bzw. auf den Dichtkörper 10 einwirkende Gasdruck ausgesprochen gering ist, denn im Anschluss an den Ringkanal 21 wirkt der Gasdruck nur auf einem kleinen Vorsprung 42 des rückwärtigen Gehäuseteiles 17.

Figur 2 und Figur 4 verdeutlichen die Wirkungsweise des Handhebels 3 mit dem Druckteil 4, wobei sowohl Figur 2 wie Figur 4 entnommen werden kann, dass das Druckteil 4 des Handhebels 3 dadurch verlängert ist, dass die Welle 54 bzw. der Schwenkpunkt 6 nahe an den Rand 53 der Handgriffsausnehmung 47 herangelegt ist. An der Spitze 52 des Druckteils 4 ist im Druckbereich 55 eine Kugel 56 angeordnet. Sie ist in einer Schraubhalterung 57 geführt und sorgt dafür, dass der Druck auf den Ansatz 15 möglichst gleichmäßig erfolgt. Die Schraubhalterung 57 ermöglicht es, den Abstand zur freien Spitze 58 des Ansatzes 15 noch im gewissen Rahmen einzustellen. Die freie Spitze 58 des Ansatzes 15 ist abgeschnitten oder gemuldet oder sonst wie ausgebildet, um ein gleichmäßiges Auftreffen und Einwirken der Kugel 56 auf den Ansatz 15 zu gewährleisten.

Der für die Dichtheit des Ventils 1 sorgende Teil bzw. die Teile sind in einem zylindertopfähnlichen Teil des Ventilrohres 2 untergebracht. Die Verbindung zum Handhebel 3 und dem Druckteil 4 erfolgt über den Ansatz 15, wobei dieser Bereich durch ein Dichtteil 50 mit Ringsteg 51 abgedichtet ist. Entsprechendes ist sowohl Figur 2 und 3 wie auch insbesondere Figur 4 zu entnehmen. Der Ansatz 15 durchörtert dabei den Boden dieses zylinderischen Topfes, während das Einschubteil 46 mit den Schrägbohrungen 43, 44 sowie der Dichtkörper 10 mit der innen liegenden Ventilfeder 8 von oben her eingelegt und über den Ansatz 15 eingesteckt ist. Der notwendige Abschluss und damit auch die Festlegung des festzusetzenden vorderen Gehäuseteils 16 erfolgt über die Schraubhülse 60, die am anderen freien Ende ein Außengewinde aufweist, sodass hier weitere Rohre angeschlossen werden können oder Schläuche.

Gut erkennbar ist in Figur 4 sowohl der Lochkranz 20 mit den Bohrungen 22, 23 und dem Ringkanal 21 wie auch die Anordnung der Schrägbohrungen 43, 44 und die Lochkanäle 48, 48'.

Alle genannten Merkmale, auch die den Zeichnungen allein zu entnehmenden, werden allein und in Kombination als erfindungswesentlich angesehen.

## Patentansprüche

1. Schnellschlussventil mit Dosierentlastung für Sauerstofflanzen und andere, leicht entzündliche mit mehreren bar anstehende Gase führende Rohre, wobei die das Ventil (1) passierende Gasmenge von Hand zu regeln ist, wozu im Durchflusskanal (7) ein axial gegen die Kraft einer Ventilfeder (8) verschiebbare, über die Ventilfeder (8) in einem Dichtsitz (11) gehaltener Dichtkörper (10) angeordnet ist, der über einen auf der dem Gaszufluss (9) abgewandten Seite (12) hervorstehenden Ansatz (15) von dem Druckteil (4) eines am Ventilrohr (2) schwenkbar angebrachten Handhebels (3) den Dichtkörper (10) im Durchflusskanal (7) mitnehmend verschiebbar ist,
**dadurch gekennzeichnet,**
**dass** der Dichtkörper (10) zweiteilig und die Ventilfeder (8) aufnehmend hohl ausgebildet ist, dass das dem Gaszufluss (9) zugewandte Gehäuseteil (16) im Durchflusskanal (7) festgelegt und das rückwärtige Gehäuseteil (17) den Dichtsitz (11) freigebend im vorderen Gehäuseteil (16) gegen die Kraft der Ventilfeder (8) verschiebbar und umgekehrt über die Ventilfeder (8) im Dichtsitz (11) gehalten ist.

2. Schnellschlussventil nach Anspruch 1,
**dadurch gekennzeichnet,**
**dass** das vordere Gehäuseteil (16) mit der in den Gaszufluss (9) hineinreichenden Kegelspitze (18) über einen Lochkranz (20) mit der Wandung (19) des Durchflusskanals (7) verbunden oder an ihr festgelegt ist.

3. Schnellschlussventil nach Anspruch 2,
**dadurch gekennzeichnet,**
**dass** vom Gaszufluss (9) her gesehen hinter dem Lochkranz (20) mit vorzugsweise 20 Bohrungen (22, 23) bei 25 mm Kanaldurchmesser ein Ringkanal (21) ausgebildet ist.

4. Schnellschlussventil nach Anspruch 2,
**dadurch gekennzeichnet,**
**dass** die Kegelspitze (18) in das abgerundete Dach (25) des vorderen Gehäuseteils (16) übergehend und den Gasfluss annähernd laminar führend ausgebildet ist.

5. Schnellschlussventil nach einem der vorhergehenden Ansprüche,
**dadurch gekennzeichnet,**
**dass** eine im vorderen Gehäuseteil (16) verschiebbare, offene Gehäusehülse (26) des rückwärtigen Gehäuseteils (17) zylinderisch und zwei Dichtringe (27, 28) auf der Außenseite (29) aufweisend geformt ist, wobei das vordere Gehäuseteil (16) eine korrespondierende Innenbohrung (30) aufweist.

6. Schnellschlussventil nach Anspruch 5,
**dadurch gekennzeichnet,**
**dass** die Gehäusehülse (26) eine Axialbohrung (32) aufweist, die in eine jenseits der Dichtungsschräge (34) des hinteren Gehäuseteils (17) endende Radialbohrung (33) übergehend und damit eine Fließverbindung (35) zum Durchflusskanal (7) bzw. Umgehungskanal (38) vorgebend ausgebildet ist.

7. Schnellschlussventil nach einem der vorhergehenden Ansprüche,
**dadurch gekennzeichnet,**
**dass** der Ansatz (15) mit der Dichtungsschräge (34) des hinteren bzw. rückwärtigen Gehäuseteils (17) über korrespondierende Gewinde (39, 40) verfügt und dabei die mit dem Dichtsitz (11) korrespondierende Dichtungsschräge (34) mit Dichtungsring (41) gegen die Gehäusehülse (26) festsetzend verbindbar ist.

8. Schnellschlussventil nach einem der vorhergehenden Ansprüche,
**dadurch gekennzeichnet,**
**dass** die von den Bohrungen (22, 23) des Lochkranzes (20) gebildeten Umgehungskanäle (38) in hinter den Dichtsitz (11) ansetzende Schrägbohrungen (43, 44) mit Schrägbohrungsraum (45) und von dort in an der Handgriffsausnehmung (47) vorbeiführende Lochkanäle (48) übergehend ausgebildet sind.

9. Schnellschlussventil nach einem der vorhergehenden Ansprüche,
**dadurch gekennzeichnet,**
**dass** der Dichtsitz (11) und die Schrägbohrungen (43, 44) einem den Ansatz (15) führenden Einschubteil (46) zugeordnet sind und dass auf dem Ansatz (15) ein den Schrägbohrungsraum (45) abdichtendes Dichtteil (50) mit Ringsteg (51) angeordnet ist.

10. Schnellschlussventil nach einem der vorhergehenden Ansprüche,
**dadurch gekennzeichnet,**
**dass** der Handhebel (3) um eine randseitig der Handgriffsausnehmung (47) angeordnete Welle (54) schwenkbar und am überstehenden Druckteil (4) eine im Druckbereich (55) angeordnete Kugel (56) aufweist.

11. Schnellschlussventil nach Anspruch 10,
**dadurch gekennzeichnet,**
**dass** die Kugel (56) einer in das Druckteil (4) einschraubbaren Schraubhalterung (57) zugeordnet ist und dass die freie Spitze (58) des Ansatzes (15) abgeschrägt oder abgeschnitten oder gemuldet ist.

12. Schnellschlussventil nach einem der vorhergehenden Ansprüche,
**dadurch gekennzeichnet,**
**dass** der Dichtkörper (10) mit dem Ansatz (15) und das Einschubteil (46) mit den Schrägbohrungen (43, 44) über eine Schraubhülse (60) im Ventilrohr (2) festlegbar sind.

## Claims

1. A quick-action stop valve with metering discharge for oxygen lances and other pipes which carry easily inflammable gases at pressures of several bars, wherein the amount of gas inflowing which passes the valve (1) can be adjusted by hand, wherefore there is a sealing body (10) arranged in the flow-through channel (7) which can be moved axially against the force of a valve spring (8), held in place by the valve spring (8) in a sealing seat (11), which can be moved in the flow-through channel (7) along with a projection (15) located on the opposite side (12) to that of the gas inflow (9) by the pressure part (4) of a manual lever (3) which can be swiveled on the valve pipe (2),
**characterized**
**in that** the sealing body (10) is made up of two parts and is hollow to receive the valve spring (8), and in that the part of the housing (16) facing the gas inflow (9) is fixed in the flow-through channel (7) and the rear part of the housing (17) can be moved to free up the sealing seat (11) in the front part of the housing (16) against the force of the valve spring (8) and is, vice versa, held by the valve spring (8) in the sealing seat (11).

2. The quick-action stop valve according to Claim 1,
**characterized**
**in that** the front part of the housing (16) is connected with the conical tip (18) projecting into the gas inflow (9) with the wall (19) of the flow-through channel (7) over a circle of holes (20) or is fixed to it.

3. The quick-action stop valve according to Claim 2,
**characterized**
**in that**, seen from the gas inflow side (9), there is a ring duct (21) behind the circle of holes (20) with preferably 20 boreholes (22, 23) for a 25 mm duct diameter.

4. The quick-action stop valve according to Claim 2,
**characterized**
**in that** the conical tip (18) is designed to merge with the rounded roof (25) of the front part of the housing (16) and to guide the gas flow in a virtually laminar manner.

5. The quick-action stop valve according to any one of the preceding claims,
**characterized**
**in that** an open housing sleeve (26) of the rear part of the housing (17), which housing sleeve can be moved in the front part of the housing (16), is cylindrical and formed with two sealing rings (27, 28) on the outer side (29), wherein the front part of the housing (16) has a corresponding inner borehole (30).

6. The quick-action stop valve according to Claim 5,
**characterized**
**in that** the housing sleeve (26) has an axial borehole (32) which merges with a radial borehole (33) ending beyond the sealing slope (34) of the rear part of the housing (17) and therefore predefines a flow connection (35) to the flow-through channel (7) or bypass channel (38).

7. The quick-action stop valve according to any one of the preceding claims,
**characterized**
**in that** the projection (15) with the sealing slope (34) of the rear or rearward part of the housing (17) has a corresponding thread (39, 40) and can then be connected with the sealing slope (34) with sealing ring (41) corresponding with the sealing seat (11) against the housing sleeve (26) so as to fix said sealing slope.

8. The quick-action stop valve according to any one of the preceding claims,
**characterized**
**in that** the bypass channels (38) formed by the boreholes (22, 23) of the circle of holes (20) are designed to merge with oblique boreholes space (45) with oblique boreholes (43, 44) starting behind the sealing seat (11) and, from there, with hole channels (48) which bypass the hand grip recess (47).

9. The quick-action stop valve according to any one of the preceding claims,
**characterized**
**in that** the sealing seat (11) and the oblique boreholes (43, 44) are assigned to a plug-in part (46) which guides the projection (15) and in that there is a sealing part (50) with a piston ring land (51) for sealing the oblique boreholes space (45) arranged on the projection (15).

10. The quick-action stop valve according to any one of the preceding claims,
**characterized**
**in that** the hand lever (3) can be swiveled around a shaft (54) arranged on the edge of the hand grip recess and has a ball (56) arranged on the projecting pressure part (4) in the pressure area (55).

11. The quick-action stop valve according to Claim 10,
**characterized**
**in that** the ball (56) is assigned to a screw holder (57) which can be screwed into the pressure part (4) and in that the free tip (58) of the projection (15) is slanted or cut off or throughed.

12. The quick-action stop valve according to any one of the preceding claims,
**characterized**
**in that** the sealing body (10) with the projection (15) and the plug-in part (46) can be firmly attached to the oblique boreholes (43, 44) through a collet (60) in the valve pipe (2).

## Revendications

1. Soupape à fermeture rapide avec décharge de dosage pour lances d'oxygène et autres tubes conduisant des gaz facilement inflammables de plusieurs bar, étant donné que la quantité de gaz qui traverse la soupape (1) doit être réglée manuellement, ce pour quoi est disposé dans le canal d'écoulement (7) un corps d'étanchéité (10) pouvant être décalé axialement contre la force d'un ressort de soupape (8) et retenu par l'intermédiaire du ressort de soupape (8) dans un siège d'étanchéité (11), lequel corps d'étanchéité peut être déplacé par l'intermédiaire d'une projection (15) située à la face opposée (12) de l'amenée de gaz (9) par la pièce de pression (4) d'une manette (3) installée de manière pivotante sur le tube de valve (2) de façon à entraîner le corps d'étanchéité (10) dans le canal d'écoulement (7),
**caractérisée**
**en ce que** le corps d'étanchéité (10) est composé de deux pièces et est creux de manière à loger le ressort de soupape (8), en ce que la partie de boîtier (16) orientée vers l'amenée de gaz (9) est fixée dans le canal d'écoulement (7) et la partie de boîtier arrière (17) peut être déplacée dans la partie de boîtier avant (16), libérant le siège d'étanchéité (11), contre la force du ressort de soupape (8) et, à l'inverse, est retenue par l'intermédiaire du ressort de soupape (8) dans le siège d'étanchéité (11).

2. Soupape à fermeture rapide selon la revendication 1,
**caractérisée**
**en ce que** la partie de boîtier avant (16) avec la pointe conique (18) faisant saillie dans l'amenée de gaz (9) est reliée par l'intermédiaire d'une couronne de lumières (20) avec la paroi (19) du canal d'écoulement (7) ou est fixée à cette dernière.

3. Soupape à fermeture rapide selon la revendication 2,
**caractérisée**
**en ce que**, vu de l'amenée de gaz (9), est formé derrière la couronne de lumières (20) présentant de préférence 20 alésages (22, 23) un canal annulaire (21) avec un diamètre de canal de 25 mm.

4. Soupape à fermeture rapide selon la revendication 2,
**caractérisée**
**en ce que** la pointe conique (18) est formée de manière à transiter dans le toit arrondi (25) de la partie de boîtier avant (16) et à conduire l'écoulement de gaz de façon pratiquement laminaire.

5. Soupape à fermeture rapide selon l'une quelconque des revendications précédentes,
**caractérisée**
**en ce qu'**un manchon de boîtier (26) ouvert de la partie de boîtier arrière (17), décalable dans la partie de boîtier avant (16), est formé de manière cylindrique et présente deux bagues d'étanchéité (27, 28) sur la face extérieure (29), étant donné que la partie de boîtier avant (16) présente un alésage intérieur (30) correspondant.

6. Soupape à fermeture rapide selon la revendication 5,
**caractérisée**
**en ce que** le manchon de boîtier (26) présente un alésage axial (32) formé de manière à transiter dans un alésage radial (33) débouchant au-delà du biseau d'étanchéité (34) de la partie de boîtier arrière (17) et, ainsi, à prédéfinir une liaison d'écoulement (35) vers le canal d'écoulement (7) ou le canal de dérivation (38).

7. Soupape à fermeture rapide selon l'une quelconque des revendications précédentes,
**caractérisée**
**en ce que** la projection (15) avec le biseau d'étanchéité (34) de la partie de boîtier arrière (17) est dotée de filetages (39, 40) correspondants et peut alors être reliée de manière à fixer le biseau d'étanchéité (34) avec bague d'étanchéité (41) correspondant avec le siège d'étanchéité (11) contre le manchon de boîtier (26).

8. Soupape à fermeture rapide selon l'une quelconque des revendications précédentes,
**caractérisée**
**en ce que** les canaux de dérivation (38) formés par les alésages (22, 23) de la couronne de lumières (20) sont formés de manière à transiter dans des alésages inclinés (43, 44) avec espace d'alésage incliné (45) partant de derrière le siège d'étanchéité (11) et, de là, dans des canaux perforés (48) by-passant l'évidement de poignée (47).

9. Soupape à fermeture rapide selon l'une quelconque des revendications précédentes,
**caractérisée**
**en ce que** le siège d'étanchéité (11) et les alésages inclinés (43, 44) sont affectés à une pièce embrochable (46) qui conduit la projection (15) et en ce qu'est disposée sur la projection (15) une pièce d'étanchéité (50) avec listel de piston (51) qui étanche l'espace d'alésage incliné (45).

10. Soupape à fermeture rapide selon l'une quelconque des revendications précédentes,
**caractérisée**
**en ce que** la manette (3) peut pivoter autour d'un arbre (54) disposé en marge de l'évidement de poignée (47) et présente sur la pièce de pression (4) en saillie une bille (56) disposée dans la zone de pression (55).

11. Soupape à fermeture rapide selon la revendication 10,
**caractérisée**
**en ce que** la bille (56) est affectée à un support à vis (57) pouvant être vissé dans la pièce de pression (4) et en ce que la pointe libre (58) de la projection (15) est biseautée ou découpée ou en auge.

12. Soupape à fermeture rapide selon l'une quelconque des revendications précédentes,
**caractérisée**
**en ce que** le corps d'étanchéité (10) avec la projection (15) et la pièce embrochable (46) peuvent être fixés avec les alésages inclinés (43, 44) au moyen - d'une pince de serrage (60) dans le tube de valve (2).
